# EUROPÄISCHE PATENTSCHRIFT

(11) **EP 4 080 176 B1**
(45) Veröffentlichungstag und Bekanntmachung des Hinweises auf die Patenterteilung: **28.06.2023**
(21) Anmeldenummer: 21169148.0
(22) Anmeldetag: 19.04.2021
(51) Int. Cl.: G01G 21/22, G01G 21/23

(54) **WAAGE MIT EINER MESSPLATTFORM, DIE VON STANDFÜSSEN GETRAGEN WIRD**
SCALES HAVING A MEASURING PLATFORM SUPPORTED BY FEET
BALANCE DOTÉE D'UNE PLATEFORME DE MESURE PORTÉE PAR DES PIEDS SUPPORTS

(43) Veröffentlichungstag der Anmeldung: 26.10.2022
(73) Patentinhaber: seca gmbh & co. kg, 22089 Hamburg (DE)
(72) Erfinder: Feldmann, Patrick, 22547 Hamburg (DE); Pritzlaff, Thomas, 21365 Adendorf (DE); Willenbrock, Kai, 22049 Hamburg (DE)
(74) Vertreter: Uexküll & Stolberg

(56) Entgegenhaltungen:
- DE-A1-102008 062 249
- US-A1- 2004 035 610

## Beschreibung

Die vorliegende Erfindung betrifft eine Waage mit einer Messplattform, die von wenigstens drei sich am Boden abstützenden Standfüßen getragen wird, wobei jedem Standfuß eine Wägezelle zugeordnet ist, die den auf den Standfuß entfallenden Anteil der von der Messplattform ausgehenden Gewichtskraft erfasst.

Derartige Waagen werden als Personenwaagen oder als anderweitige Waagen zum Wiegen von Objekten verwendet.

Soweit hierin auf eine vertikale Richtung Bezug genommen wird, bezieht sich diese auf die Richtung der Schwerkraft der Erde und auf eine Stellung der Waage, in der die Waage in betriebsbereiter Positionierung auf einem sie tragenden, ebenen horizontalen Boden steht.

US 2004/0035610 A1 offenbart eine Waage mit dem Merkmalen des Oberbegriffs von Patentanspruch 1 .

Eine typische andere bekannte Waage hat folgenden Aufbau, auf dem der Oberbegriff von Patentanspruch 1 basiert. Die Waage hat unterhalb ihrer Messplattform einen stabilen, rechteckigen Trägerrahmen. In den Eckbereichen des Trägerrahmens sind jeweils horizontal nach außen verlaufende Träger montiert, die an ihrer oberen, der Unterseite der Messplattform zugewandten Seite jeweils eine Wägezelle tragen. Jeder horizontale Träger ist mit einem Standfuß versehen, der von seiner unteren, von der Messplattform abgewandten Seite vertikal nach unten absteht und der gegenüber der Wägezelle in horizontaler Richtung nach außen versetzt ist. Jeder Standfuß ist in einem Gewinde an dem zugehörigen horizontalen Träger drehbar gelagert, so dass die Höhe des Standfußes an dem horizontalen Träger durch Drehen des Standfußes einstellbar ist. Eine sehr ähnliche Waage ist in DE 10 2008 062 249 beschrieben, wobei hier die Wägezelle selbst eine horizontale Ausdehnung und als Biegebalken ausgebildet ist, der an einem Ende mit der Messplattform verschraubt ist und in dessen gegenüberliegendes Ende ein Standbein eingeschraubt ist.

Der geschilderte Aufbau hat mehrere Nachteile. Die Standfüße einschließlich ihrer höhenverstellbaren Lagerung sind an den Trägern ist vertikal auf niedrigerem Niveau unterhalb der Wägezellen angeordnet, so dass deren vertikalen Bauhöhen sich zu einer vertikalen Gesamtbauhöhe addieren. Ferner werden durch die horizontale Versetzung des Standfußes zur der Wägezelle auf dem horizontalen Träger erhebliche Hebelkräfte erzeugt, die durch Abstand zwischen der Krafteinleitung in die Wägezelle und die Weiterleitung über den horizontalen Träger in Standfuß erzeugt werden. Diese Hebelkräfte können ein Durchbiegen der horizontalen Träger verursachen und die Genauigkeit der Waage beeinträchtigen.

Es ist Aufgabe der vorliegenden Erfindung, eine Waage so auszugestalten, dass eine sehr flache Bauform der Waage realisierbar ist. Es ist eine weitere Aufgabe der Erfindung, eine Waage so auszugestalten, bei der auch bei hoher Belastung keine schädliche Durchbiegung auftritt, so dass es auch für große Waagen für hohe Gewichte möglich ist, ein eichfähiges Produkt zu realisieren.

Zur Lösung dieser Aufgabe dient die Waage mit den Merkmalen des Patentanspruchs 1. Vorteilhafte Ausführungsformen der Erfindung sind in den Unteransprüchen aufgeführt.

Bei der erfindungsgemäßen Waage ist jeder Standfuß als Messfuß ausgebildet, indem die zugehörige Wägezelle in der in Anspruch 1 definierten Weise in den Messfuß integriert ist. Dazu ist jeder Standfuß als vertikal verlaufender Messfuß ausgebildet mit: einem in Bezug auf die Messplattform drehfest gehaltenen Wägezellenträger, auf dem die Wägezelle ruht und befestigt ist und der ein Außengewinde aufweist, und mit einem unter dem Wägezellenträger befindlichen Stellfuß. Der Stellfuß ist zur Aufnahme wenigstens eines vertikalen Teilbereichs des Wägezellenträgers mit einer oben offenen kreiszylindrischen Aussparung ausgestaltet, die an ihrem seitlichen Umfang mit einem zum Außengewinde des Wägezellenträgers passenden Innengewinde versehen ist. Der Wägezellenträger ist mit seinem Außengewinde in das Innengewinde des Stellfußes eingeschraubt, so dass durch Drehen des Stellfußes relativ zum Wägezellenträger der Messfuß in seiner Höhe entlang der Schraubachse einstellbar ist.

Auf diese Weise kann eine geringe Bauhöhe der Waage realisiert werden, denn der Höhenverstellmechanismus kann in vertikaler Richtung zumindest teilweise mit dem Wägezellenträger und der Wägezelle überlappen, wohingegen im Stand der Technik der höhenverstellbare Standfuß und der Wägezellenträger notwendig vertikal gegeneinander versetzt angeordnet waren, wie in der Einleitung beschrieben.

Ferner erfolgt eine zentrierte, vertikale Krafteinleitung von der Wägezelle, über den Wägezellenträger in den Stellfuß. Dadurch können keine Durchbiegungen in kraftübertragenden Komponenten eintreten, da keine nicht vertikal verlaufenden kraftübertragenden Komponenten vorhanden sind. Durch das Vermeiden von Hebelkräften und den daraus resultierenden Durchbiegungen bei der Krafteinleitung ist die Genauigkeit der Waage erhöht, und es ist auch für große in dieser Weise ausgebildete Waagen, die für hohe Tragkräfte ausgelegt sind, möglich, ein eichfähiges Produkt zu realisieren.

In einer bevorzugten Ausführungsform der Waage ist jedem Messfuß ein Pufferstützelement zugeordnet, das vertikal zwischen der Messplattform und der oben an dem Messfuß liegenden Wägezelle liegt und der sich mittig und zentriert auf dem sensitiven Bereich der Wägezelle abstützt, so dass der Kraftfluss von der Messplattform vertikal durch das Pufferstützelement in die Wägezelle oben am Messfuß erfolgt. Das Pufferstützelement kann aus Gummi als Gummipuffer ausgebildet sein. Das Pufferstützelement kann eine beliebige Form haben, z.B. die Form eines Kreiszylinders, eines Prismas, einer Scheibe, eines Quaders etc. haben.

Vorzugsweise ist in jedem Messfuß die Wägezelle zentriert im Wägezellenträger gelagert und der Wägezellenträger zentriert in dem Stellfuß geschraubt, so dass der Kraftfluss von der Messplattform vertikal durch jeden Messfuß erfolgt.

In einer bevorzugten Ausführungsform ist jedes Pufferstützelement kegelstumpfförmig ausgestaltet, wobei die größere Stirnfläche des kegelstumpfförmigen Pufferstützelements an der Unterseite der Messplattform anliegt und das kegelstumpfförmige Pufferstützelement sich über die kleinere Stirnfläche auf der Wägezelle abstützt.

In einer bevorzugten Ausführungsform ist jeder Messfuß am unteren Ende weiterhin mit einer Gerätefußplatte versehen, die an der von der Messplattform abgewandten Seite des Stellfußes fest mit diesem verbunden ist und die zur Krafteinleitung der durch den Messfuß übertragenen Gewichtskraft in den Boden ausgebildet ist. Die Gerätefußplatte kann lösbar oder permanent mit dem Stellfuß verbunden sein.

In einer bevorzugten Ausführungsform kann ein Adaptergehäuse zur Aufnahme oder zum Anbau von nicht wägesensitiven Zusatzkomponenten vorgesehen sein; nicht wägesensitive Zusatzkomponenten sind solche Komponenten, die nicht mit gewogen werden sollen. Solche nicht wägesensitiven Zusatzkomponenten müssen an einem nicht wägesensitiven Bereich der Waage, wie etwa dem Adaptergehäuse, untergebracht oder angebaut werden, so dass sie den Wägevorgang nicht beeinflussen. Das Adaptergehäuse weist einen vertikalen Durchgang aufweist. Durch den Durchgang des Adaptergehäuses verläuft der Stellfuß, der nicht mit dem Adaptergehäuse verbunden ist und somit im Durchgang frei drehbar ist. Die Gerätefußplatte steht über die Öffnung des Durchgangs des Adaptergehäuses hinaus vor, so dass das Adaptergehäuse sich dadurch nicht von dem Stellfuß lösen kann.

In einer vorteilhaften Ausführungsform sind es vier Messfüße, die die Messplattform tragen. Die vier Messfüße können an den Eckpunkten eines Quadrats angeordnet sein.

In einer vorteilhaften Ausführungsform können die Messfüße zu einem Messfußverbund verbunden sein, indem von jedem Messfuß zwei Rahmenteile ausgehen, die den Messfuß mit den beiden nächst benachbarten Messfüßen verbinden. Die Rahmenteile sind mit den Messfüßen verbunden und gehören damit zum nicht wägesensitiven Bereich, d.h. ihr Gewicht wirkt nicht auf die Wägezellen ein. Im Fall eines solchen Messfußverbundes können in oder an den Rahmenteilen mit den Wägezellen verbundene elektrische Leitungen geführt sein. Es ist zu bemerken, dass dieser Rahmen keine tragende Funktion hat.

Vorzugsweise ist an wenigstens einem Rahmenteil eine Steckbuchse angebracht, die mit einer in dem Rahmenteil verlaufenden Leitung verbunden ist und die zum Anschluss eines externen Steckers einer Leitung dient. Es können auch mehrere Steckbuchsen in einer Anschlusseinheit integriert sein. Unter den Steckbuchen können USB-, Netzwerkbuchsen und Buchsen zum Anschluss einer Spannungsversorgung sein. Vorteilhaft an diesen Ausführungsformen ist, dass eine an die Steckbuchse angeschlossene Leitung im nicht wägesensitiven Bereich angeschlossen ist und damit mit ihrem Gewicht keinen Einfluss auf das Wägeergebnis hat.

Die Erfindung wird im Folgenden anhand eines Ausführungsbeispiels in den Zeichnungen beschrieben, in denen:
Fig. 1 eine perspektivische Ansicht einer Ausführungsform der Waage zeigt, wobei die Messplattform von den Messfüßen abgehoben dargestellt ist,
Fig. 2 eine perspektivische Explosionsdarstellung eines Messfußes der Waage aus Fig. 1 zeigt,
Fig. 3 eine Querschnittsansicht des Messfußes der Waage aus Fig. 1 und 2 zeigt und
Fig. 4 eine Explosionsdarstellung des Messfußes in seitlicher Draufsicht mit der Messplattform im Querschnitt zeigt.

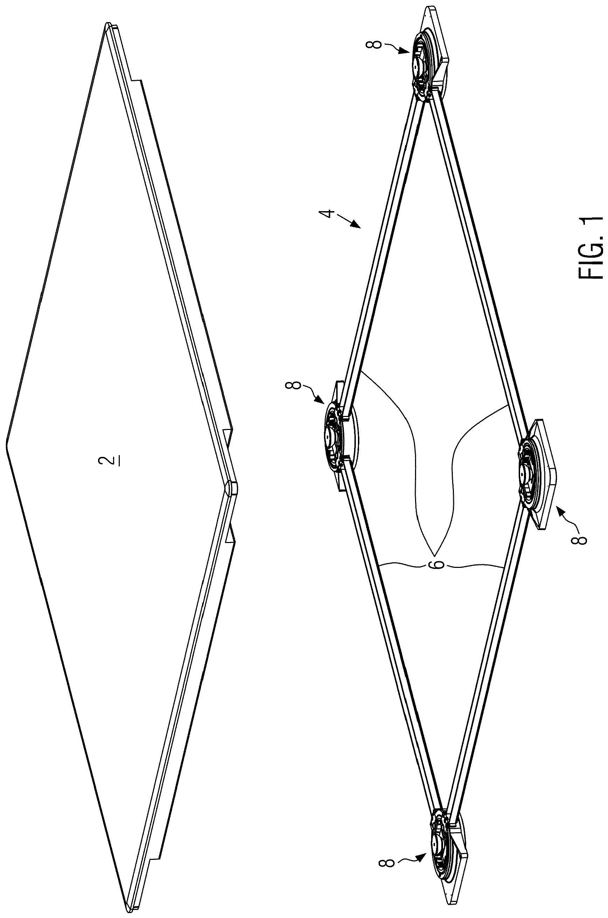

Fig. 1 zeigt eine Ausführungsform der Waage in perspektivischer Ansicht, wobei eine Messplattform 2 der Waage von einem darunter befindlichen Messfußverbund 4 gelöst und angehoben dargestellt ist. Der Messfußverbund 4 umfasst vier Messfüße 8, die an den Ecken eines Quadrats angeordnet sind und miteinander durch Rahmenteile 6 verbunden sind.

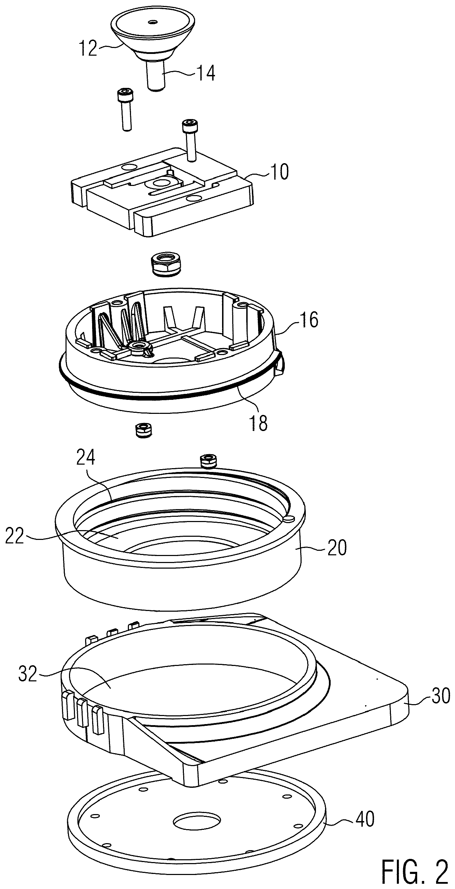

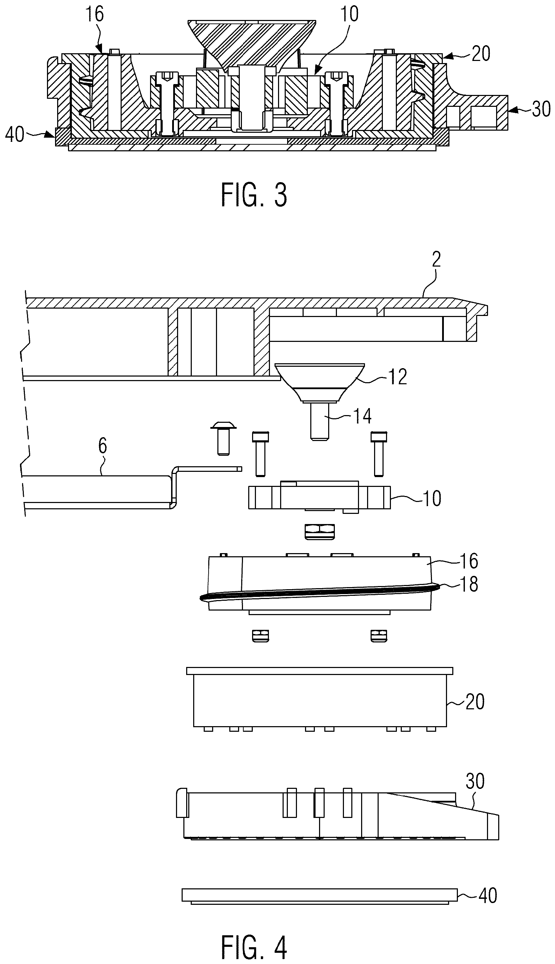

Der Aufbau eines einzelnen Messfußes 8 wird im Folgenden mit Bezug auf die Figuren 2 bis 4 beschrieben, die den Messfuß in Fig. 2 und Fig. 4 in Explosionsdarstellung und in Fig. 3 in Schnittdarstellung zeigen. Der Messfuß umfasst eine Wägezelle 10, deren Oberseite oben am Messfuß freiliegt. Die Wägezelle 10 ist in einem Wägezellenträger 16 aufgenommen und befestigt. Der Wägezellenträger 16 ist generell becherförmig mit einem nach oben offenen Aufnahmeraum, der zur zentrierten Aufnahme der Wägezelle 10 ausgestaltet ist, und hat eine kreiszylinderförmige Außenwand. Die Wägezelle 10 ist in dem Wägezellenträger 16 beispielsweise durch Schrauben befestigt. Die Oberseite der Wägezelle bleibt dabei in dem oben offenen Wägezellenträger 16 frei zugänglich.

Die zylindrische Außenwand des becherförmigen Wägezellenträgers 16 ist mit einem Außengewinde 18 versehen.

Vertikal unterhalb des Wägezellenträgers 16 befindet sich ein Stellfuß 20, der ebenfalls im Wesentlichen becherförmig ist und eine mittige, zylindrische Aussparung 22 aufweist. Die Innenwand der zylindrischen Aussparung 22 ist mit einem Innengewinde 24 versehen, das zu dem Außengewinde 18 des Wägezellenträgers 16 passt. Der Wägezellenträger 16 ist mit seinem Außengewinde 18 in das Innengewinde 24 des Stellfußes 20 geschraubt. Durch Drehen des Stellfußes 20 relativ zum Wägezellenträger 16 lässt sich einstellen, wie tief der Wägezellenträger 16 in die zylindrische Aussparung 22 des Stellfußes 20 hinein bzw. daraus heraus geschraubt wird, d.h. wie groß die vertikale Ausdehnung des Verbundes aus Stellfuß 20 und Wägezellenträger 16 ist. Auf diese Weise ist das Höhenniveau jedes Messfußes 8 individuell einstellbar.

Um die Einstellbarkeit der Höhe des Messfußes 8 durch Drehen des Stellfußes 20 relativ zum Wägezellenträger 16 zu ermöglichen, ist der Wägezellenträger 16 in Bezug auf die Messplattform 2 drehfest gehalten, damit der sich nicht mit dem Stellfuß 20 drehen kann. Diese drehfeste Verbindung wird z.B. in folgender Weise realisiert. Die Messplattform 2 liegt über ein Pufferstützelement 12 auf der Wägezelle 10 auf. Das Pufferstützelement 12 aus Gummi hat in dem dargestellten Ausführungsbeispiel die Form eines Kegelstumpfes, wobei die größere Stirnfläche des Pufferstützelements 12 mit der Unterseite der Messplattform verbunden ist, zum Beispiel durch eine Klebstoffverbindung mit der Unterseite der Messplattform 2. Das kegelstumpfförmige Pufferstützelement 12 ist mit einem darin aufgenommenen Gewindestift 14 versehen, der zentral aus der kleineren Stirnfläche des Pufferstützelements 14 vorsteht. Der Gewindestift 14 ragt durch einen Durchgang in der Wägezelle 10 hindurch nach unten über die Wägezelle 10 hinaus vor. Auf das über die Wägezelle 10 vorstehende Ende des Gewindestiftes 14 ist eine Mutter aufgeschraubt, die fest angezogen wird, um so eine reibschlüssige Verbindung mit dem Pufferstützelement 12 und damit mit der Messplattform 2 herzustellen.

Die drehfeste Halterung des Wägezellenträgers 16 in Bezug auf die Messplattform 2 wird weiter durch die Verbindung jedes Stellfußes 16 mit zwei davon ausgehenden Rahmenteilen 6 (siehe Fig. 1 und Fig. 4) unterstützt, wobei ein Ende des Rahmenteils 6 auf dem Rand des Wägezellenträgers 16 zur Auflage kommt und darauf festgeschraubt wird. Dies ist in Fig. 4 angedeutet, in der oberhalb des Endes des Rahmenteils 6 eine Schraube gezeigt ist, die nach dem Absenken des Endes des Rahmenteils 6 auf den Rand des Wägezellenträgers 16 in ein dafür vorgesehenes Gewinde in der Außenwand des Wägezellenträgers 16 eingeschraubt wird. Tatsächlich sind für jedes Rahmenteil 6 jeweils zwei Schrauben vorgesehen, die das Ende des Rahmenteils 6 an dem Rand des Wägezellenträgers 16 befestigen.

Optional ist an dem Stellfuß 20 ein Adaptergehäuse 30 angebracht. Das Adaptergehäuse 30 weist einen ringförmigen Abschnitt mit einem zylindrischen Durchgang 32 auf, durch den der Stellfuß 20 verläuft. Das Adaptergehäuse 30 ist dabei nicht direkt mit dem Stellfuß 20 verbunden, so dass dieser in dem Durchgang 32 des Adaptergehäuses 30 frei drehbar ist. In den radial außerhalb des Durchgangs 32 liegenden Bereichen des Adaptergehäuses 30 können für den Wägevorgang nicht relevante Zusatzkomponenten bereitgehalten werden.

Am unteren Ende des Messfußes ist eine Gerätefußplatte 40 oder Gerätegrundplatte 40 vorhanden, die die mit ihrem ebenen Zentralbereich fest mit dem ebenen Boden an der Unterseite des Stellfußes 20 verbunden ist. Die Gerätefußplatte 40 dient zur Einleitung der von dem jeweiligen Messfuß 8 übertragenen Gewichtskraft in den Boden, auf dem die Waage steht. Wenn die Waage angehoben wird, kann ein Benutzer jeden Messfuß 8 durch Drehen seiner Gerätefußplatte 40 in seinem Höhenniveau individuell einstellen. Die Drehung der Grundplatte 40 überträgt sich direkt auf den fest damit verbundenen Stellfuß 20, der sich dadurch relativ zum Wägezellenträger 16 dreht und dadurch die vertikale Ausdehnung des Verbundes aus Stellfuß 20 und Wägezellenträger 16 einstellt. Der Wägezellenträger 16 ist dabei wie oben beschrieben relativ zu der Messplattform 2 drehfest gehalten und kann sich daher nicht mit dem Stellfuß 20 bei der Einstellung der Höhe des Messfußes 8 mitdrehen.

Die geschilderte Ausbildung der Standfüße der Waage als Messfüße 8 ermöglicht eine geringe vertikale Bauhöhe der Waage, da die höheneinstellbaren Komponenten des Fußes (Wägezellenträger 16 und Stellfuß 20) in vertikaler Richtung mehr oder weniger stark überlappen, je nachdem in welchem Umfang der Wägezellenträger 16 in den Stellfuß 20 hinein oder daraus heraus geschraubt ist. Im Gegensatz dazu befand sich im einleitend beschriebenen Stand der Technik der Wägezellenträger mit der Wägezelle vertikal vollständig oberhalb des höhenverstellbaren Standfußes, so dass sich deren Bauhöhen immer in vollem Umfang addierten, was eine größere Bauhöhe zur Folge hat.

Ein weiterer Vorteil des beschriebenen Aufbaus der Messfüße 8 besteht darin, dass die auf jeden Messfuß 8 entfallende Gewichtskraft rein vertikal und zentriert durch den Messfuß 8 in den Boden weitergeleitet wird. Die Übertragung der Gewichtskraft von der Messplattform 2 erfolgt durch das Pufferstützelement 12 zentriert auf die Wägezelle 10, und weiter vertikal und zentriert durch den Wägezellenträger, der zentriert in dem Stellfuß 20 gelagert ist, so dass der Stellfuß 20 schließlich die Gewichtskraft vertikal über die Gerätefußplatte 40 in den Boden einleitet, auf dem die Waage steht. Anders als im Stand der Technik, bei dem zwischen dem Punkt der Krafteinleitung in die Wägezelle und dem Punkt der Weiterleitung der Gewichtskraft in den Boden ein horizontaler Abstand vorhanden war, der für die Erzeugung von Hebelkräften und Durchbiegungen in dem Aufbau führen konnte, liegen für den Messfuß 8 der Punkt der Einleitung von Gewichtskraft in die Wägezelle und der Punkt der Weiteleitung vom Messfuß in den Boden vertikal übereinender und die Weiterleitung der Gewichtskraft durch den Messfuß erfolgt ausschließlich in vertikaler Richtung. Die Vermeidung von jeglichen Hebelkräften durch die rein vertikale Weiterleitung der auf den Messfuß 8 enwirkenden Gewichtskraft der Messplattform 2 in den Boden erlaubt eine größere Messgenauigkeit der Waage. Daher können auch für große Waagen mit hohen Tragkräften eichfähige Waagen realisiert werden.

## Patentansprüche

1. Waage mit einer Messplattform (2), die von wenigstens drei sich am Boden abstützenden Standfüßen getragen wird, wobei jedem Standfuß eine Wägezelle zugeordnet ist, die den auf den Standfuß entfallenden Anteil der von der Messplattform (2) ausgehenden Gewichtskraft erfasst, und jeder Standfuß als vertikal verlaufender Messfuß (8) ausgebildet ist, **dadurch gekennzeichnet, dass** der Messfuß (8):
einen Wägezellenträger (16), auf dem die Wägezelle (10) ruht und befestigt ist und der mit einem Außengewinde (18) versehen ist, wobei der Wägezellenträger (16) drehfest in Bezug auf die Messplattform gehalten ist, und
einen unter dem Wägezellenträger (16) befindlichen Stellfuß (20) aufweist, der zur Aufnahme wenigstens eines vertikalen Teilbereichs des Wägezellenträgers (16) mit einer oben offenen kreiszylindrischen Aussparung (22) ausgestaltet ist, die an ihrem seitlichen Umfang mit einem zum Außengewinde (18) des Wägezellenträgers (16) passenden Innengewinde (24) versehen ist, wobei der Wägezellenträger (16) mit seinem Außengewinde (18) in das Innengewinde (24) des Stellfußes (20) eingeschraubt ist, so dass durch Drehen des Stellfußes (20) relativ zum Wägezellenträger (16) der Messfuß (8) in seiner Höhe entlang der Schraubachse einstellbar ist.

2. Waage nach Anspruch 1, **dadurch gekennzeichnet, dass** jedem Messfuß ein Pufferstützelement (12) zugeordnet ist, das vertikal zwischen der Messplattform (2) und dem zugeordneten Messfuß (8) verlaufend angeordnet ist und sich mittig und zentriert auf der Wägezelle (10) oben am Messfuß (8) abstützt, so dass der Kraftfluss von der Messplattform (2) vertikal durch das Pufferstützelement (12) in den Messfuß (8) erfolgt.

3. Waage nach Anspruch 2, **dadurch gekennzeichnet, dass** die Pufferstützelemente (12) aus Gummi sind.

4. Waage nach Anspruch 2 oder 3, **dadurch gekennzeichnet, dass** in jedem Messfuß (8) die Wägezelle (10) zentriert im Wägezellenträger (16) gelagert ist und der Wägezellenträger (16) zentriert in den Stellfuß (20) geschraubt ist, so dass der Kraftfluss von der Messplattform (2) vertikal durch jeden Messfuß (8) erfolgt.

5. Waage nach einem der Ansprüche 2 bis 4, **dadurch gekennzeichnet, dass** jedes Pufferstützelement (12) kegelstumpfförmig ist, wobei die größere Stirnfläche des kegelstumpfförmigen Pufferstützelements (12) an der Unterseite der Messplattform (2) anliegt und das kegelstumpfförmigen Pufferstützelement (12) sich über die kleinere Stirnfläche auf der Wägezelle (10) abstützt.

6. Waage nach einem der vorhergehenden Ansprüche, **dadurch gekennzeichnet, dass** jeder Messfuß (8) am unteren Ende weiter mit einer Gerätefußplatte (40) versehen ist, die an der von der Messplattform (2) abgewandten Seite des Stellfußes (20) fest mit diesem verbunden ist und die zur Krafteinleitung der durch den Messfuss (8) übertragenen Gewichtskraft in den Boden ausgebildet ist.

7. Waage nach einem der vorhergehenden Ansprüche, **dadurch gekennzeichnet, dass** ein Adaptergehäuse (30) zur Aufnahme nicht wägesensitiver Zusatzkomponenten einen vertikalen Durchgang (32) aufweist, durch den der Stellfuß (20) verläuft, der nicht mit dem Adaptergehäuse (30) verbunden und somit im Durchgang (32) frei drehbar ist, wobei die Gerätefußplatte (40) über die Öffnung des Durchgangs (32) des Adaptergehäuses (30) hinaus vorsteht, um so zu verhindern, dass sich das Adaptergehäuse (30) von dem Stellfuß löst.

8. Waage nach einem der vorhergehenden Ansprüche, **dadurch gekennzeichnet, dass** vier Messfüße (8) die Messplattform (2) tragen.

9. Waage nach einem der vorhergehenden Ansprüche, **dadurch gekennzeichnet, dass** die Messfüße (8) einen Messfußverbund (4) bilden, indem jeder Messfuß (8) durch zwei Rahmenteile (6) mit seinen beiden nächst benachbarten Messfüßen verbunden ist.

10. Waage nach Anspruch 9, **dadurch gekennzeichnet, dass** in oder an den Rahmenteilen (6) mit den Wägezellen (12) verbundene elektrische Leitungen geführt sind.

11. Waage nach Anspruch 9 oder 10, **dadurch gekennzeichnet, dass** an wenigstens einem der Rahmenteile (6) eine Steckbuchse angebracht und mit einer im Rahmenteil verlaufenden Leitung verbunden ist.

12. Waage nach Anspruch 11, **dadurch gekennzeichnet, dass** die Steckbuchse eine USB-, eine Netzwerk- oder eine Spannungsversorgungsbuchse ist.

## Claims

1. Weighing scale having a measuring platform (2) which is supported by at least three supporting feet resting on a floor, wherein to each supporting foot a load cell is assigned, wherein each load cell senses a share of the weight force originating from the measuring platform supported by the respective supporting foot, wherein each supporting foot is designed as a vertically extending measuring foot (8), **characterized in that** each measuring foot (8) comprises:
a load cell carrier (16) on which the load cell (10) rests and is attached, wherein the load cell carrier (16) is provided with an external thread (18), and which is mounted to be non-rotatable with respect to the measuring platform; and
an adjusting foot (20) located below the load cell carrier (16), wherein the adjusting foot (20) is provided with a circular-cylindrical recess for receiving at least a vertical section of the load cell carrier (16), wherein the circular-cylindrical recess being provided in its surrounding circumferential wall with an internal thread (24) fitting to the external thread (18) of the load cell carrier (16), wherein the load cell carrier (16) is screwed with its external thread (18) into the internal thread (24) of the adjusting foot (20) such that, by turning the adjusting foot (20) relative to the load cell carrier (16), a vertical height of the measuring foot (8) along a vertical screw axis is adjustable.

2. Weighing scale according to claim 1, **characterized in that** a damping support member (12) is assigned to each measuring foot, the damping support member extending vertically between the measuring platform (2) and the assigned measuring foot (8) and is resting in a centered manner on the load cell (10) at the top of the measuring foot (8), such that the force flow from the measuring platform (2) is directed through the damping support member (12) vertically into the vertically extending measuring foot (8).

3. Weighing scale according to claim 2, **characterized in that** the damping support members (12) are made of rubber.

4. Weighing scale according to claim 2 or 3, **characterized in that** in each measuring foot (8) the load cell (10) is supported in a centered manner in the load cell carrier (16), and that the load cell carrier (16) is screwed in a centered manner into the adjusting foot (20) such that the force flow from the measuring platform (2) is directed vertically through each measuring foot (8).

5. Weighing scale according to any of the claims 2 to 4, **characterized in that** each damping support member (12) has a frusto-conical shape, wherein a larger end face of the frusto-conical damping support member (12) is abutting against an underside of the measuring platform and that the frusto-conical damping support member (12) rests with its smaller end face on the load cell (10).

6. Weighing scale according to any of the preceding claims, **characterized in that** each measuring foot (8) at its lower end is provided with a foot plate (40) which is connected to the underside of the adjusting foot (20) facing away from the measuring platform (2) and which is configured to introduce the weight force transmitted through the measuring foot (8) into the floor.

7. Weighing scale according to any of the preceding claims, **characterized in that** an adapter housing (30) for accommodating not weighing relevant accessory parts comprises a vertical passage (32) through which the adjusting foot (20) extends, which adjusting foot (20) is not connected to the adapter housing (30) and is thus free to rotate relative to the passage (32), wherein the foot plate (40) projects beyond the opening of the passage (32) of the adapter housing (30) to prevent the adapter housing (30) from separating from the adjusting foot.

8. Weighing scale according to any of the preceding claims, **characterized in that** four measuring feet (8) support the measuring platform (2).

9. Weighing scale according to any of the preceding claims, **characterized in that** the measuring feet (8) form a connected measuring feet assembly (4) in which each measuring foot (8) is connected by two frame members (6) to its two nearest neighboring measuring feet.

10. Weighing scale according to claim 9, **characterized in that** in or on the frame members (6) electric conductors connected to the load cells (12) are routed.

11. Weighing scale according to claim 9 or 10, **characterized in that** a plug socket is connected to at least one of the frame members (6) and is connected to an electric conductor extending in the frame member.

12. Weighing scale according to claim 11, **characterized in that** the plug socket is a USB, a network or a power supply socket.

## Revendications

1. Balance avec une plate-forme de mesure (2), qui est supportée par au moins trois pieds s'appuyant contre le sol, dans lequel, à chaque, correspond une cellule de pesage qui mesure la part exercée sur le pied du poids exercé par la plate-forme de mesure (2), et chaque pied est conçu comme un pied de mesure (8) s'étendant verticalement, **caractérisé en ce que** le pied de mesure (8) :
un support de cellule de pesage (16), sur lequel repose et est fixée la cellule de pesage (10) et qui est muni d'un filetage externe (18), dans lequel le support de cellule de pesage (16) est maintenu de manière solidaire en rotation par rapport à la plate-forme de mesure et
comprend un pied de réglage (20) se trouvant en dessous du support de cellule de pesage (16), qui est conçu pour le logement d'au moins une partie verticale du support de cellule de pesage (16) avec un évidement cylindrique ouvert en haut (22), qui est muni, sur sa périphérie latérale, d'un filetage interne (24) adapté au filetage externe (18) du support de cellule de pesage (16), dans lequel le support de cellule de pesage (16) est vissé, avec son filetage externe (18), dans le filetage interne (24) du pied de réglage (20), de façon à ce qu'une rotation du pied de réglage (20) par rapport au support de cellule de pesage (16), permette de régler le pied de mesure (8) en hauteur le long de l'axe de vissage.

2. Balance selon la revendication 1, **caractérisée en ce que**, à chaque pied de mesure (8), correspond un élément d'appui tampon (12) qui est disposé de façon à s'étendre verticalement entre la plate-forme de mesure (2) et le pied de mesure (8) correspond et s'appuie au milieu et de manière centrée sur la cellule de pesage (10) en haut du pied de mesure (8), de façon à ce que le flux de force parte de la plate-forme de mesure (2) et traverse l'élément d'appui tampon (12) vers le pied de mesure (8).

3. Balance selon la revendication 2, **caractérisée en ce que** les éléments d'appui tampons (12) sont constitués de caoutchouc.

4. Balance selon la revendication 2 ou 3, **caractérisée en ce que**, dans chaque pied de mesure (8), la cellule de pesage (10) est logée de manière centrée dans le support de cellule de pesage (16) et le support de cellule de pesage (16) est vissée de manière centrée dans le pied de réglage (20), de façon à ce que le flux de force aille de la plate-forme de mesure (2) verticalement à travers chaque pied de mesure (8).

5. Balance selon l'une des revendications 2 à 4, **caractérisée en ce que** chaque élément d'appui tampon (12) présente une forme tronconique, dans lequel la face frontale la plus grande de l'élément d'appui tampon (12) tronconique s'appuie contre la face inférieure de la plate-forme de mesure (2) et l'élément d'appui tampon (12) tronconique s'appuie contre la cellule de pesage (10) par l'intermédiaire de la face frontale la plus petite.

6. Balance selon l'une des revendications précédentes, **caractérisée en ce que** chaque pied de mesure (8) est en outre muni, à l'extrémité inférieure, d'une plaque de pied d'appareil (40) qui est reliée, sur le côté opposé à la plate-forme de mesure (2) du pied de réglage (20), fermement avec celui-ci et qui est conçue pou appliquer la force du poids transmise par le pied de mesure (8) dans le sol.

7. Balance selon l'une des revendications précédentes, **caractérisée en ce qu'**un boîtier d'adaptateur (30) comprend, pour le logement de composants supplémentaires non sensibles au poids, un passage vertical (32), à travers lequel le pied de réglage (20) s'étend, qui n'est pas relié avec le boîtier d'adaptateur (30) et peut donc tourner librement dans le passage (32), dans lequel la plaque de pied d'appareil (40) dépasse hors de l'ouverture du passage (32) du boîtier d'adaptateur (40) afin d'empêcher ainsi que le boîtier d'adaptateur (30) se détache du pied de réglage.

8. Balance selon l'une des revendications précédentes, **caractérisée en ce que** quatre pieds de mesure (8) supportent la plate-forme de mesure (2).

9. Balance selon l'une des revendications précédentes, **caractérisée en ce que** les pieds de mesure (8) forment un ensemble de pieds de mesure (4) grâce au fait que chaque pied de mesure (8) est relié par deux parties de cadre (6) avec les pieds de mesure adjacents les plus proches.

10. Balance selon la revendication 9, **caractérisée en ce que** dans ou sur les parties de cadre (6) sont guidés des câbles électriques reliés aux cellules de pesage (12).

11. Balance selon la revendication 9 ou 10, **caractérisée en ce que**, sur au moins une des parties de cadre (6), est monté un connecteur d'enfichage, qui est relié avec un câble s'étendant dans la partie de cadre.

12. Balance selon la revendication 11, **caractérisée en ce que** le connecteur d'enfichage est un connecteur USB, un connecteur réseau ou un connecteur d'alimentation de tension.
